# EUROPÄISCHE PATENTSCHRIFT

(11) **EP 1 119 695 B1**
(45) Veröffentlichungstag und Bekanntmachung des Hinweises auf die Patenterteilung: **28.04.2004**
(21) Anmeldenummer: 99944547.1
(22) Anmeldetag: 28.08.1999
(51) Int. Cl.: F02D 33/02, F02B 37/24

(54) **VERFAHREN ZUR REGELUNG ODER STEUERUNG EINER AUFGELADENEN BRENNKRAFTMASCHINE**
METHOD FOR REGULATING OR CONTROLLING A SUPERCHARGED INTERNAL COMBUSTION ENGINE
PROCEDE DE REGLAGE OU DE COMMANDE D'UN MOTEUR A COMBUSTION INTERNE CHARGE

(30) Priorität: 26.09.1998 DE 19844214
(43) Veröffentlichungstag der Anmeldung: 01.08.2001
(73) Patentinhaber: DaimlerChrysler AG, 70567 Stuttgart (DE)
(72) Erfinder: SCHMID, Wolfram, D-72622 Nürtingen (DE)
(86) Internationale Anmeldenummer: PCT/EP1999/006341
(87) Internationale Veröffentlichungsnummer: WO 2000/019073

(56) Entgegenhaltungen:
- DE-A- 19 804 466
- DE-C- 4 025 901
- DE-C- 19 531 871
- DE-C- 19 728 352
- US-A- 5 782 092

## Beschreibung

Die Erfindung betrifft ein Verfahren zur Regelung oder Steuerung einer aufgeladenen Brennkraftmaschine nach dem Oberbegriff des Anspruches 1.

Aus der DE 40 25 901 C1 ist ein Abgasturbolader für eine Brennkraftmaschine bekannt, der eine Turbine mit einer über einen variablen Turbinenleitapparat veränderlich einstellbaren Turbinengeometrie und einen von der Turbine angetriebenen Verdichter zur Erhöhung des Ladedrucks im Zylindereinlaß aufweist. Der Turbinenleitapparat kann mit Hilfe eines Stellglieds so eingestellt werden, daß der wirksame Turbinenquerschnitt der Turbine verändert wird. Hierdurch ist es möglich, je nach Betriebszustand der Brennkraftmaschine verschieden hohe Abgasgegendrücke im Abschnitt zwischen den Zylindern und dem Abgasturbolader zu realisieren, wodurch die Leistung der Turbine und die Leistung des Verdichters je nach Bedarf eingestellt werden können. Der Turbinenleitapparat wird gemäß vorgegebenen Kennlinien auf einen Soll-Ladedruck geregelt.

Um im Instationärbetrieb der Brennkraftmaschine mit einfachen Mitteln eine Verbesserung des Wirkungsgrades zu erzielen, erfolgt die Ladedruckregelung unterhalb und oberhalb eines Schwellwertes für den Abgasgegendruck nach unterschiedlichen Kennlinien. Damit kann verhindert werden, daß es nach einem positiven Lastwechsel noch während des Anstiegs des Ladedrucks zu unkontrollierten Druckerhöhungen in der Abgasleitung stromauf der Turbine kommt. Die Brennkraftmaschine muß nicht mehr gegen einen erhöhten Abgasgegendruck ausschieben, der Wirkungsgrad ist erhöht.

Ein weiteres Verfahren zur Regelung des Ladedrucks ist aus der DE 195 31 871 C1 bekannt. Um im Instationärbetrieb der Brennkraftmaschine, insbesondere nach positivem Lastwechsel aus niederen Last- und Drehzahlbereichen heraus, den Wirkungsgrad zu verbessern, wird gemäß dieser Druckschrift vorgeschlagen, zur Einstellung des Ladedrucks als Steuergröße für die Regelung die Differenz aus Abgasgegendruck und Ladedruck zu bestimmen. Hierdurch kann eine unzulässig hohe Abweichung des Abgasgegendrucks bei positivem Lastwechsel erkannt und durch geeignete Maßnahmen korrigiert werden.

Der Erfindung liegt das Problem zugrunde, das Betriebsverhalten des Motors über alle Last- und Drehzahlbereiche zu optimieren.

Dieses Problem wird erfindungsgemäß mit den Merkmalen des Anspruches 1 gelöst.

Mit dem neuartigen Verfahren kann der Motor über den gesamten Betriebsbereich im Hinblick auf den Zielkonflikt von Verbrauchsoptimierung und Dynamikoptimierung eingestellt werden. Über die Unterscheidung zwischen den Betriebsmodi Stationärbetrieb und Instationärbetrieb kann jedem Betriebspunkt der Brennkraftmaschine das jeweils günstigste Kennfeld für die Einstellung der variablen Turbinengeometrie zugeordnet werden.

Die Unterscheidung zwischen den verschiedenen Betriebsmodi erfolgt über einen Motor-Kennwert, über den der Instationärbetrieb identifizierbar ist. Als Motor-Kennwert wird der Lastgradient und/oder der Drehzahlgradient ermittelt, wobei Instationärbetrieb vorliegt, wenn der Motor-Kennwert einen gegebenen Grenzwert überschreitet. Unterhalb des Grenzwerts befindet sich der Motor im Stationärbetrieb.

Dem Instationärbetrieb und dem Stationärbetrieb werden jeweils ein Kennfeld zugeordnet, das der Einstellung des variablen Bauelements der Turbinengeometrie zugrunde gelegt wird, um das Betriebsverhalten der Abgasturbine im Hinblick auf Verbrauch und dynamisches Verhalten günstig zu beeinflussen. Hierbei ist das dem Stationärbetrieb zugeordnete Kennfeld verbrauchsoptimal für geringen Ladedruck und das dem Instationärbetrieb zugeordnete Kennfeld dynamikoptimal für höheren Ladedruck ausgelegt. In der verbrauchsoptimalen Auslegung ist der Luftdurchsatz im unteren Lastbereich des Motors verringert, wodurch die Ladungswechselverluste minimiert werden und ein niedriger Kraftstoffverbrauch erreicht werden kann. Diese Betriebsweise eignet sich bevorzugt für Fahrten mit näherungsweise konstanter Geschwindigkeit und Last, beispielsweise für Autobahnfahrten.

In der dynamikoptimalen Auslegung ist es vorteilhaft, den Luftdurchsatz, insbesondere im unteren Lastbereich, zu erhöhen, um ausreichend Motorleistung zur Verfügung zu stellen und insbesondere schnelle Leistungsänderungen zu ermöglichen. Diese Betriebsweise eignet sich bevorzugt für den Stadtverkehr.

Nachdem über den Motor-Kennwert auf Instationärbetrieb erkannt wurde, kann dieser für eine vorgebbare Haltezeit aufrecht erhalten werden. Erst nach Ablauf der Haltezeit wird zweckmäßig eine erneute Identifizierung des aktuellen Betriebsmodus vorgenommen, wobei je nach Wert des Motor-Kennwerts der Instationärbetrieb für eine erneute Haltezeit-Periode beibehalten wird oder auf Stationärbetrieb umgeschaltet wird.

In dem verbrauchsoptimalen Kennfeld, das dem Stationärbetrieb zugeordnet ist, wird bei niedriger Drehzahl und zugleich niedriger Last die variable Turbinengeometrie zweckmäßig in Offenstellung gehalten, wodurch der die Turbine beaufschlagende Abgasgegendruck und die auf den Verdichter übertragene Leistung sowie der Ladedruck relativ niedrig gehalten werden. Die Ladungswechselverluste werden minimiert, der Kraftstoffverbrauch reduziert.

In dem dem Instationärbetrieb zugeordneten dynamikoptimierten Kennfeld wird dagegen die variable Turbinengeometrie bei niedriger Last und niedriger Drehzahl vorteilhaft in Staustellung gehalten, in der der Abgasgegendruck stromauf der Turbine erhöht ist und die Abgasströmung mit höherer Geschwindigkeit auf das Turbinenlaufrad trifft. Daraus resultiert ein höherer Ladedruck, der das dynamische Verhalten positiv beeinflußt.

Die Einstellung auf den gewünschten Ladedruck kann geregelt oder gesteuert erfolgen, wobei zweckmäßig eine Unterscheidung zwischen Regelung und Steuerung über weitere Zustandsgrößen des Motors, insbesondere über den Absolutwert von Drehzahl und Last, vorgenommen wird. So kann beispielsweise bei niedrigen Drehzahlen/Lasten eine Steuerung, bei höheren Drehzahlen/Lasten eine Regelung erfolgen. Die Steuerung bei niedrigen Drehzahlen/Lasten hat den Vorteil, unabhängig von äußeren Einflüssen wie beispielsweise fallender Atmosphärendruck im Höhenbetrieb zu sein, die sich dem Ladedruck überlagern und bei einer Regelung einen unzulässig hohen Einfluß ausüben würden. Bei Regelungen im höheren Drehzahl/Lastbereich wird bevorzugt auf einen im Kennfeld vorgegebenen Ladedruck-Sollwert geregelt, bei Steuerungen wird die Position der variablen Turbinengeometrie entsprechend den im Kennfeld abgelegten Werten vorgenommen.

Es kann zweckmäßig sein, die Regelung und Steuerung zu kombinieren, indem zunächst über die Turbinenposition auf einen Rohwert des Ladedrucks gesteuert und anschließend zur Feinjustierung auf den Ladedruck-Sollwert geregelt wird. In diesem Fall können jedem Betriebsmodus zwei oder gegebenenfalls mehrere Kennfelder zugeordnet werden, wobei innerhalb eines Betriebsmodus über zusätzliche Motor-Kenngrößen zwischen den Kennfeldern unterschieden werden kann.

Weitere Vorteile und zweckmäßige Ausführungsformen sind den weiteren Ansprüchen, der Figurenbeschreibung und den Zeichnungen zu entnehmen. Es zeigen:
- Fig. 1: ein Kennfeld für den Stationärbetrieb mit Positionswerten für die variable Turbinengeometrie,
- Fig. 2: ein Fig. 1 entsprechendes Kennfeld, jedoch für den Instationärbetrieb,
- Fig. 3: verschiedene Drehmoment-Drehzahl-Kurven für den Stationärbetrieb,
- Fig. 4: verschiedene Drehmoment-Drehzahl-Kurven für den Instationärbetrieb.

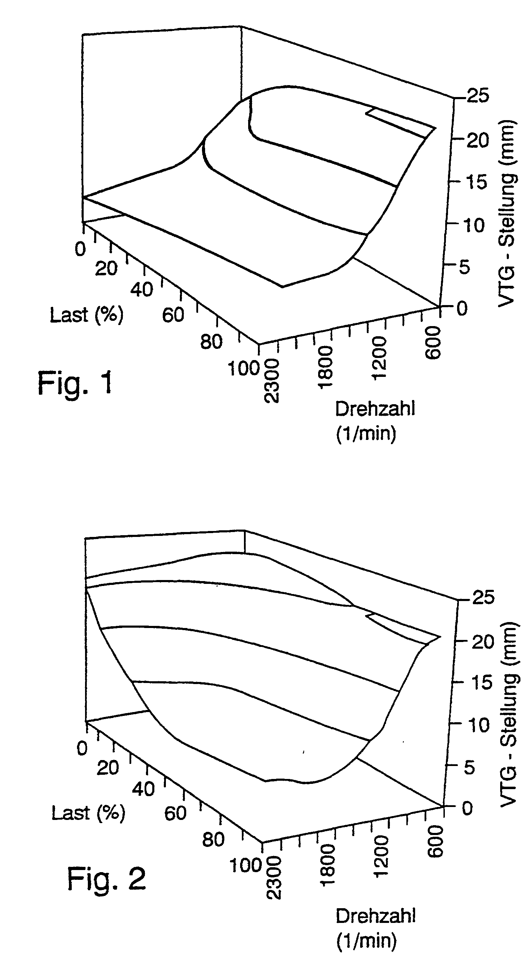

Die in den Fig. 1 und 2 dargestellten Kennfelder für den Stationärbetrieb bzw. den Instationärbetrieb einer aufgeladenen Brennkraftmaschine mit variabler Turbinengeometrie (VTG) zeigen jeweils diverse Stellungen der Turbinengeometrie in Abhängigkeit der Last und der Drehzahl mit typischen Skalierungen für ein Nutzfahrzeug. Das Stellelement der Turbinengeometrie wird last- und drehzahlabhängig mit Stellsignalen beaufschlagt, woraufhin die Turbinengeometrie die vertikal aufgetragenen Stellungen einnimmt. Die Einstellungen können im Wege einer Steuerung vorgenommen werden, wobei diese Vorgehensweise den Vorteil der schnellen Umsetzung hat, da die Stellsignale für die Turbinengeometrie unmittelbar vorgegeben werden können. Es ist aber auch möglich, anstelle einer Steuerung eine Regelung zu verwenden; in diesem Fall werden zweckmäßig Ladedruck-Sollwerte in Abhängigkeit der Last und der Drehzahl vorgegeben und der Ladedruck im Ansaugtrakt stromab des Verdichters durch Variation der Turbinengeometrie auf den aktuellen Sollwert geregelt.

Fig. 1 zeigt ein Kennfeld für den Stationärbetrieb für eine verbrauchsoptimierte Betriebsweise, Fig. 2 zeigt ein Kennfeld für den Instationärbetrieb für eine dynamikorientierte Betriebsweise des Motors. Je nach aktuellem Betriebsmodus des Motors wird das Kennfeld nach Fig. 1 oder nach Fig. 2 der Regelung bzw. Steuerung zugrunde gelegt. Die Unterscheidung zwischen den beiden Betriebsmodi erfolgt über einen Motor-Kennwert, der eine eindeutige Identifizierung des momentanen Betriebsmodus - Stationärbetrieb oder Instationärbetrieb - erlaubt. Als Motor-Kennwert wird der Lastgradient und/oder der Drehzahlgradient ermittelt und mit einem vorgegebenen Grenzwert verglichen. Liegt der Motor-Kennwert oberhalb des Grenzwerts, befindet sich die Brennkraftmaschine im Instationärbetrieb und es wird das dem Instationärbetrieb zugeordnete Kennfeld berücksichtigt; unterhalb des Grenzwerts liegt Stationärbetrieb mit dem zugehörigen Kennfeld vor. Als Lastgradient wird die Änderungsgeschwindigkeit der Last, als Drehzahlgradient die Änderungsgeschwindigkeit der Drehzahl zur Ermittlung der Motor-Kennwert herangezogen. Der Motor-Kennwert kann sich entweder auf den Lastgradienten oder auf den Drehzahlgradienten oder auf eine Kombination von Last- und Drehzahlgradienten beziehen.

In den dargestellten Kennfeldern bedeutet eine VTG-Stellung gleich Null, daß die variable Turbinengeometrie sich in Offenstellung befindet, in der auch der wirksame Turbinenquerschnitt maximal wird. Umgekehrt bedeutet eine auf das Maximum gesetzte VTG-Stellung, daß die variable Turbinengeometrie in die Staustellung versetzt ist, in der der wirksame Turbinenquerschnitt auf ein Minimum reduziert ist.

Als VTG kann eine Turbine mit Axialschieber, eine Turbine mit Radialleitgitter oder eine Klappenturbine eingesetzt werden.

Dem dem Stationärbetrieb zugeordneten Kennfeld nach Fig. 1 ist zu entnehmen, daß die VTG bei geringer Last sich in Offenstellung befindet, so daß der Abgasgegendruck nicht oder nur geringfügig aufgestaut wird. Die Turbine liefert nur eine geringe Leistung, wodurch auch der Verdichter nur geringfügig angetrieben wird und der Luftdurchsatz durch die Brennkraftmaschine klein gehalten wird. Die Ladungswechselverluste werden dadurch minimiert und der Kraftstoffverbrauch wird gesenkt.

Das Kennfeld nach Fig. 1 gilt darüberhinaus auch für Betriebspunkte des Motors in höheren Last- und Drehzahlbereichen. Bei hoher Last, jedoch niedriger Drehzahl steigt die VTG-Stellung auf ein Maximum und die VTG befindet sich in Staustellung, in der der wirksame Turbinenquerschnitt ein Minimum einnimmt und der Abgasgegendruck erhöht ist. Die Turbinen- und Verdichterleistung ist gesteigert.

Bei hoher Last und hoher Drehzahl, beispielsweise bei konstanten Steigungen, die mit gleichbleibender Geschwindigkeit zurückgelegt werden, befindet sich die VTG im Stationärbetrieb nahe ihrer Offenstellung. Eine Reduzierung des Turbinenquerschnitts ist nicht erforderlich, da die Zylinder über die Motor-Saugwirkung mit einer ausreichenden Sauerstoffmenge versorgt werden.

Dem dem Instationärbetrieb zugeordneten Kennfeld nach Fig. 2 ist zu entnehmen, daß im unteren Lastbereich die VTG in Staustellung steht, in der der Abgasgegendruck und auch der Ladedruck erhöht ist. Bei einer folgenden Laststeigerung bzw. Drehzahlsteigerung steht somit bereits zu Beginn des Steigerungsvorganges ausreichend viel Ladedruck zur Verfügung und der Steigerungsvorgang kann in kürzerer Zeit durchgeführt werden.

Gemäß Fig. 2 befindet sich die VTG im Instationärbetrieb bei niedriger Last und niedriger Drehzahl, bei niedriger Last und hoher Drehzahl sowie bei hoher Last und niedriger Drehzahl in Staustellung. Lediglich bei hoher Last und hoher Drehzahl ist die VTG in Offenstellung versetzt.

Der Lastgradient und/oder Drehzahlgradient zur Bestimmung des Motor-Kennwerts kann regelmäßig in diskreten Zeitabständen ermittelt werden. Wird ein Instationärbetrieb identifiziert, so kann das dem Instationärbetrieb zugeordnete Kennfeld für eine vorgegebene Haltezeit berücksichtigt werden. Nach Ablauf der Haltezeit wird auf das Kennfeld des Stationärbetriebs gewechselt, sofern nicht der Motor-Kennwert einen fortdauernden Instationärbetrieb anzeigt.

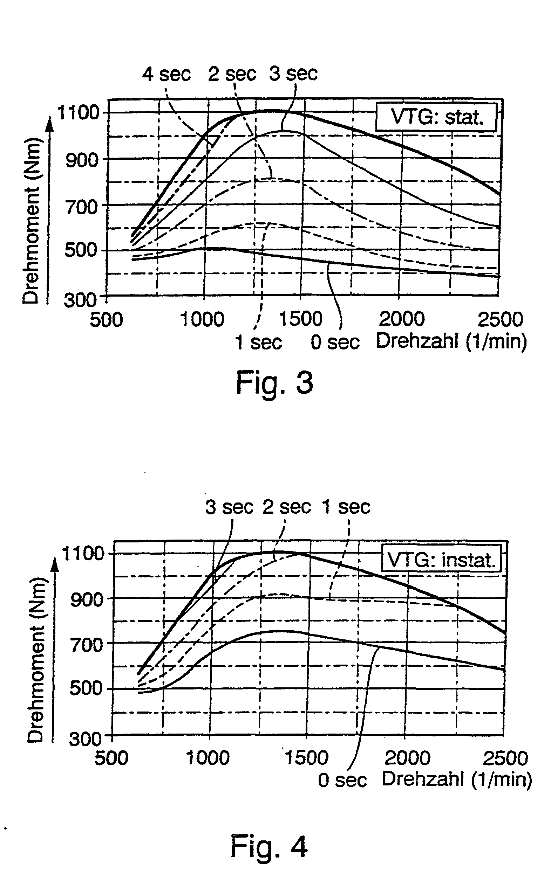

In den Fig. 3 und 4 ist der Unterschied im dynamischen Verhalten bei Einsatz eines verbrauchsoptimierten, auf den stationären Betrieb ausgelegten Kennfelds (Fig. 3) und bei Einsatz eines dynamikorientierten, auf den instationären Betrieb ausgelegten Kennfelds (Fig. 4) dargestellt. Die Diagramme in Fig. 3 und 4 zeigen den Drehmomentverlauf in Abhängigkeit der Drehzahl, wobei in jedem Diagramm mehrere Kurvenverläufe eingetragen sind, die mit Zeitangaben versehen sind und eine dynamische Entwicklung ausgehend von einem Minimum-Verlauf bis zu einem Maximalverlauf kennzeichnen. Gemäß Fig. 3 benötigt die Brennkraftmaschine gemäß dem stationären Kennfeld etwa vier Sekunden, um bei einem Lastsprung vom Minimum ausgehend das Maximum zu erreichen. Gemäß Fig. 4 werden dagegen bei Einsatz des instationären Kennfelds bereits nach zwei bis drei Sekunden das Maximum erreicht, der Drehmomentaufbau erfolgt deutlich schneller als bei Verwendung des stationären Kennfelds.

Grundsätzlich können für jeden Betriebsmodus mehrere Kennfelder vorgegeben werden. Über zusätzliche Kennwerte, beispielsweise Last oder Drehzahl, kann zwischen den Kennfeldern innerhalb eines Betriebsmodus unterschieden werden.

Darüberhinaus können weitere Betriebsarten wie befeuerte Antriebsweise oder Motorbremsbetrieb unterschieden werden, wobei jedem dieser Betriebsarten wiederum die Betriebsmodi Stationärbetrieb und Instationärbetrieb und jedem Betriebsmodus ein oder mehrere Kennfelder zugeordnet werden können.

Das Verfahren kann sowohl für aufgeladene Brennkraftmaschinen für Nutzfahrzeuge als auch für Personenkraftwagen eingesetzt werden. Das Verfahren ist für Ottomotoren und für Dieselmotoren verwendbar.

Anstelle von Kennfeldern können auch Funktionen verwendet werden.

## Patentansprüche

1. Verfahren zur Regelung oder Steuerung einer aufgeladenen Brennkraftmaschine, die einen Abgasturbolader mit einer Abgasturbine mit variabler Turbinengeometrie zur veränderlichen Einstellung des wirksamen Turbinenquerschnitts und einem Ladeluftverdichter umfaßt, wobei verschiedenen Betriebszuständen des Motors verschiedene Kennfelder mit Motor-Betriebs- und/oder Motor-Zustandsgrößen zugeordnet sind und die Turbinengeometrie entsprechend den Kennfelder zwischen einer Offenstellung und einer Staustellung verstellbar ist, und wobei bei einer Änderung eines signifikanten Motor-Kennwerts zwischen zwei Kennfeldern umgeschaltet wird,
**dadurch gekennzeichnet,**
**daß** als Motor-Kennwert der Lastgradient und/oder der Drehzahlgradient zur Identifizierung des Stationärbetriebs bzw. des Instationärbetriebs des Motors ermittelt wird,
**daß** dem Stationärbetrieb und dem Instationärbetrieb des Motors jeweils ein Kennfeld zugeordnet wird,
**daß** das dem Stationärbetrieb zugeordnete Kennfeld verbrauchsoptimal für geringeren Ladedruck ausgelegt ist
und **daß** das dem Instationärbetrieb zugeordnete Kennfeld dynamikoptimal für höheren Ladedruck ausgelegt ist.

2. Verfahren nach Anspruch 1,
**dadurch gekennzeichnet,**
**daß** in mindestens einem Betriebsmodus Stationärbetrieb/Instationärbetrieb eine Regelung auf die Werte des jeweiligen Kennfelds erfolgt.

3. Verfahren nach Anspruch 2,
**dadurch gekennzeichnet,**
**daß** mindestens ein Kennfeld mit Ladedruck-Sollwerten vorgegeben wird.

4. Verfahren nach einem der Ansprüche 1 bis 3,
**dadurch gekennzeichnet,**
**daß** in mindestens einem Betriebsmodus Stationärbetrieb/Instationärbetrieb eine Steuerung auf die Werte des jeweiligen Kennfelds erfolgt.

5. Verfahren nach Anspruch 4,
**dadurch gekennzeichnet,**
**daß** mindestens ein Kennfeld mit Positionen für die variable Turbinengeometrie vorgegeben wird.

6. Verfahren nach einem der Ansprüche 1 bis 5,
**dadurch gekennzeichnet,**
**daß** das dynamikorientierte Kennfeld des Instationärbetriebs für eine vorgegebene Haltezeit aufrecht erhalten wird.

7. Verfahren nach Anspruch 6,
**dadurch gekennzeichnet,**
**daß** nach Ablauf der Haltezeit eine erneute Identifizierung des Betriebsmodus vorgenommen wird.

8. Verfahren nach einem der Ansprüche 1 bis 7,
**dadurch gekennzeichnet,**
**daß** in dem verbrauchsoptimalen Kennfeld bei niedriger Last und niedriger Drehzahl die variable Turbinengeometrie in Offenstellung gehalten wird.

9. Verfahren nach einem der Ansprüche 1 bis 8,
**dadurch gekennzeichnet,**
**daß** in dem dynamikoptimalen Kennfeld bei niedriger Last und niedriger Drehzahl die variable Turbinengeometrie in Staustellung gehalten wird.

## Claims

1. Method for the closed or open loop control of a supercharged internal combustion engine comprising a turbocharger with an exhaust gas turbine with variable turbine geometry for the variable adjustment of the effective turbine cross-section and a charge air compressor, whereby various characteristic maps with engine operating and/or engine state variables are assigned to various operating states of the engine, whereby the turbine geometry is adjustable between an open position and a back-pressure position in accordance with the characteristic maps, and whereby a switch-over occurs between two characteristic maps when a significant engine parameter changes,
**characterised in that**
the load gradient and/or the speed gradient is determined as an engine parameter for the identification of the steady-state operation or the transient operation of the engine respectively,
**in that** a characteristic map each is assigned to the steady-state operation and to the transient operation of the engine,
**in that** the characteristic map assigned to the steady-state operation is designed for a lower boost pressure for optimised consumption,
and **in that** the characteristic map assigned to the transient operation is designed for a higher boost pressure for optimised dynamics.

2. Method according to claim 1,
**characterised in that**
closed loop control to the values of the respective characteristic map is achieved in at least one steady-state/transient operating mode.

3. Method according to claim 2,
**characterised in that**
at least one characteristic map with set values for boost pressure is preset.

4. Method according to any of claims 1 to 3,
**characterised in that**
open loop control to the values of the respective characteristic map is achieved in at least one steady-state/transient operating mode.

5. Method according to claim 4,
**characterised in that**
at least one characteristic map with positions for the variable turbine geometry is preset.

6. Method according to any of claims 1 to 5,
**characterised in that**
the dynamics-oriented characteristic map of the transient operation is maintained for a preset holding time.

7. Method according to claim 6,
**characterised in that**
a renewed identification of the operating mode follows the expiry of the holding time.

8. Method according to any of claims 1 to 7,
**characterised in that**
the variable turbine geometry is held in open position at low load and low speed in the consumption-optimised characteristic map.

9. Method according to any of claims 1 to 8,
**characterised in that**
the variable turbine geometry is held in back-pressure position at low load and low speed in the dynamics-optimised characteristic map.

## Revendications

1. Procédé de régulation ou de commande d'un moteur à combustion interne suralimenté, comportant un turbocompresseur à gaz d'échappement avec une turbine à géométrie variable pour le réglage variable de la section transversale efficace de la turbine et avec un compresseur d'air de suralimentation, des champs caractéristiques différents avec des paramètres de fonctionnement et/ou d'état du moteur étant associés aux différents états de fonctionnement du moteur, et la géométrie de la turbine étant variable entre une position d'ouverture et une position d'accumulation en correspondance des champs caractéristiques, et une commutation entre deux champs caractéristiques ayant lieu lors d'une modification d'une valeur caractéristique significative du moteur,
**caractérisé en ce que**
l'on détermine à titre de valeur caractéristique du moteur le gradient de charge et/ou le gradient de vitesse de rotation pour identifier le fonctionnement stationnaire ou le fonctionnement non stationnaire du moteur,
on associe un champ caractéristique respectif au fonctionnement stationnaire et au fonctionnement non stationnaire du moteur,
le champ caractéristique associé au fonctionnement stationnaire est conçu de façon optimisée vis-à-vis de la consommation pour une faible pression de suralimentation,
et **en ce que** le champ caractéristique associé au fonctionnement non stationnaire est conçu de façon optimisée vis-à-vis de la dynamique pour une pression de suralimentation plus élevée.

2. Procédé selon la revendication 1, **caractérisé en ce que** dans au moins un mode de fonctionnement parmi le fonctionnement stationnaire ou le fonctionnement non stationnaire, on procède à une régulation aux valeurs du champ caractéristique respectif.

3. Procédé selon la revendication 2, **caractérisé en ce que** l'on prédéfinit au moins un champ caractéristique avec des valeurs de consigne de la pression de suralimentation.

4. Procédé selon l'une des revendications 1 à 3, **caractérisé en ce que** dans au moins un mode de fonctionnement parmi le fonctionnement stationnaire ou le fonctionnement non stationnaire, on procède à une commande aux valeurs du champ caractéristique respectif.

5. Procédé selon la revendication 4, **caractérisé en ce que** l'on prédéfinit au moins un champ caractéristique avec des positions pour la géométrie variable de la turbine.

6. Procédé selon l'une des revendications 1 à 5, **caractérisé en ce que** l'on maintient le champ caractéristique optimisé vis-à-vis de la dynamique du fonctionnement non stationnaire pendant une période de maintien prédéterminée.

7. Procédé selon la revendication 6, **caractérisé en ce qu'**après écoulement de la période de maintien, on procède à une nouvelle identification du mode de fonctionnement.

8. Procédé selon l'une des revendications 1 à 7, **caractérisé en ce que** dans le champ caractéristique optimisé vis-à-vis de la consommation, à une faible charge et à une faible vitesse de rotation, on maintient la géométrie variable de la turbine dans la position d'ouverture.

9. Procédé selon l'une des revendications 1 à 8, **caractérisé en ce que** dans le champ caractéristique optimisé vis-à-vis de la dynamique, à une faible charge et à une faible vitesse de rotation, on maintient la géométrie variable de la turbine dans la position d'accumulation.
